# EUROPEAN PATENT APPLICATION

(11) **EP 3 663 076 A1**
(43) Date of publication of application: **10.06.2020**
(21) Application number: 18211073.4
(22) Date of filing: 07.12.2018
(51) Int. Cl.: B29C 65/18, B29C 65/36, B29C 65/48, B65B 51/14, B65D 5/06

(54) **SEALING JAW, PACKAGING CONTAINER AND METHOD FOR SEALING**

(71) Applicant: Tetra Laval Holdings & Finance S.A., 1009 Pully (CH)
(72) Inventor: NORDQVIST, Christer, 26437 Klippan (SE); THÖRNQVIST, Oskar, 22479 Lund (SE)
(74) Representative: Tetra Pak - Patent Attorneys SE

(57) **Abstract**

A sealing jaw (21) for sealing a liquid food package (10) is provided. The sealing jaw (21) comprises at least one protrusion (23) configured to apply excessive pressure to a specific part of the package (10) during sealing, wherein at least one protrusion (23) has a rounded shape. Also a packaging container with a sealing mark (11) produced by the sealing jaw (21) and a method of sealing a packaging container are provided.

## Description

### Technical Field

The present disclosure relates to a sealing jaw, a packaging container and to a method for sealing a package for containing a liquid food product.

### Background Art

An important aspect in manufacturing packages for liquid food products, and especially carton-based packages, is to seal them in a manner that prevents leakage. Several types of packaging containers are well-known. Some of them have a so called gable top shape, with or without a screw cap on one of the inclined surfaces forming the top end of the package. One example of such packaging container having a slanted top is Tetra Rex™, which has been available on the market for many years. One critical area of this package type is the gusset tips, i.e. the triangular panels near the top of the packaging container which are folded inwards to form the gable top. This is because channels may form between the gusset tips, causing liquid product to flow to the top sealing area, whereby the risk for product leakage is increased.

This is a commonly recognized problem in relation to packages of this type and many attempts have been made to solve the issue. However, any package with a sealing area where there is a risk of leakage of the contained liquid food product will have the same or similar problem. Several techniques for sealing these channels are known, of which the most common solution is to use a linear protrusion on a sealing jaw, which assists in applying increased pressure at the area of the channels and thereby creating a sealing mark (also called stake mark) which effectively seals the channel.

The prior art successfully seals the channel, however there are problems associated with the sealing process. Sharp edges and increased pressure from the protrusion on the sealing jaw forming the sealing mark may cause tearing in the packaging material and damage thereof. There is also a risk of misaligning the sealing jaw with the sealing fin of the packaging container when creating the sealing marks, thereby missing the channel itself. It would therefore be beneficial to increase the strength and integrity of the seal in order to improve the package integrity to further reduce the risk of leakage.

### Summary

It is an object of the invention to at least partly overcome one or more of the above-identified limitations of the prior art. In particular, it is an object to improve the sealing capability and to reduce the risk of tearing of prior art sealing marks.

According to a first aspect of the invention, the above and other objects of the invention are achieved, in full or at least in part, by a sealing jaw. The sealing jaw seals a package enclosing a liquid food product and where the sealing jaw comprises at least one protrusion configured to apply pressure to a specific part of the package. The at least one protrusion has a rounded shape.

Such a rounded shape is advantageous in that it improves the sealing capability and reduces the risk of tearing. One reason for this effect is that the shape can be made to have a large, evenly distributed area which is easy to align and does not focus pressure on too small of an area.

The at least one protrusion may have a dome-shaped top.

The dome-shaped top is advantageous in that it has no sharp edges and distributes the force in an efficient manner. The lack of sharp edges reduces the risk of cutting the packaging material, thereby causing tearing and leakage. It also distributes pressure in a non-even manner. Most force is directed towards the middle of the dome, where it is most needed, i.e. the middle of the channel.

The at least one protrusion may have a rounded shape and a dome-shaped top.

The combination of a rounded shape and a dome-shaped top is advantageous in that they are synergistic. They both reduce the risk of tearing of the packaging material, which allows an even higher pressure. This higher pressure is then directed towards the middle of the channel due to the dome-shaped top, which is properly aligned due to the round shape.

The sealing jaw may further comprise at least one protrusion arranged in its center in the length direction, i.e. the direction along which a heating member on the sealing jaw extends. The central placement of the protrusion is advantageous in that it may seal a channel between gusset tips at its beginning. This is because if liquid is allowed to get into the channel between the gusset tips, it may decrease the sealing strength of the package due to increased pressure in the channel.

The first jaw may further comprise at least two protrusions in proximity to at least two edges of the first jaw.

The edge protrusions are advantageous in that they may seal a channel between gusset tips at its end(s). The pressure will be lower at the ends, which makes it easier to seal the channels there.

The sealing jaw may further comprise a heating member configured to seal the package using heat.

The heating member is advantageous in that if the packaging material comprises a plastic, polymer, silicone or glue that melts at a higher temperature to become adhesive. However, most adhesives get better using heat, so the above mentioned materials are not necessarily needed.

The sealing jaw may further comprise an induction member configured to seal the package using induction.

The induction member is advantageous in that if the packaging material comprises a material with a high electrical conductivity, such as metals like copper, gold or aluminium or graphene, then it is possible to heat this material by induction, which in turn heats the polymer layer covering the conductive layer allowing for sealing the package using heat as discussed above.

According to a second aspect, a sealing jaw system is provided. The sealing jaw system comprises a first sealing jaw according to the first aspect, and a second sealing jaw comprising a flat surface configured to engage the at least one protrusion of the first jaw.

The sealing jaw system may be arranged as two separate units, wherein one unit comprises the first jaw and the second unit comprises the second jaw. The sealing jaw system may in another embodiment be arranged as a single unit.

The single unit is advantageous in that it is simple to control and easy to align the first and the second jaw.

The sealing jaw system may be further configured to seal a top end of the package. The top end seal is advantageous, since the top end is the most important part of packages having a gabled top shape. These packages are the most susceptible to leakage at the top end.

The sealing jaw system may be further configured to seal channels between gusset tips.

The sealing of channels between gusset tips is advantageous in that these channels are the primary cause for loss of package integrity.

According to a third aspect of the invention, a packaging container for enclosing a liquid food product is provided which has an upper end with an opening, at least two lateral walls connected to the upper und, a bottom end connected to the at least two latera walls via a lower edge of the lateral walls, where a part of the package displays at least one sealing mark in the form of a recess having a rounded shape.

According to a fourth aspect of the invention, a method for sealing a package of liquid food product is provided. The method comprises the steps of pressing at least two layers of packaging material together using a sealing jaw system; and sealing the layers by pressing at channels between gusset tips using at least one protrusion with a rounded shape.

The rounded shape is advantageous in that it improves the sealing capability and reduces the risk of tearing. This is because it has a large, evenly distributed area that is easy to align and does not focus pressure on too small of an area.

The sealing step may be performed by at least one protrusion with a dome-shaped top.

The dome-shaped top is advantageous in that it has no sharp edges and distributes the force in an efficient manner. The lack of sharp edges reduces the risk of cutting the packaging material, thereby causing tearing and leakage. It also distributes pressure in a non-even manner. Most force is directed towards the middle of the dome, where it is most needed, i.e. the middle of the channel.

The sealing step may be performed by at least one protrusion with a rounded shape and a dome-shaped top.

The combination of a rounded shape and a dome-shaped top is advantageous in that they are synergistic. They both reduce the risk of tearing, which allows an even higher pressure. This higher pressure is then directed towards the middle of the channel due to the dome-shaped top, which is properly aligned due to the round shape.

The method may further comprise a step of heating the layers to further improve the seal.

The heating step is advantageous in that if the packaging material comprises a plastic, polymer, silicone or glue that melts at a higher temperature to become adhesive.

The heating step may be performed using a heating member.

The heating member is advantageous in that it is a simple and general manner to generate heat.

The heating step may be performed using an induction member.

The induction member is advantageous in that it is an efficient manner to generate heat if the material allows for it.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a is an isometric view of a package being formed by sealing a packaging material using a sealing jaw according to an embodiment;
Fig. 1b is a front view of the package of Fig. 1a with gussets and channels indicated;
Fig. 2a is a side view of a sealing jaw system arranged to seal a package;
Fig. 2b is a top view of a package in a semi-folded state of the top end, right before the sealing process is performed;
Fig. 3a is a front view of a first sealing jaw according to the prior art;
Fig. 3b is an isometric view of a first sealing jaw according to the prior art;
Fig. 4a is a front view of a first sealing jaw according to an embodiment of the invention;
Fig. 4b is an isometric view of a first sealing jaw according to another embodiment of the invention; and
Fig. 5 is a schematic illustration of a method for sealing a package according to one embodiment.

### Detailed Description

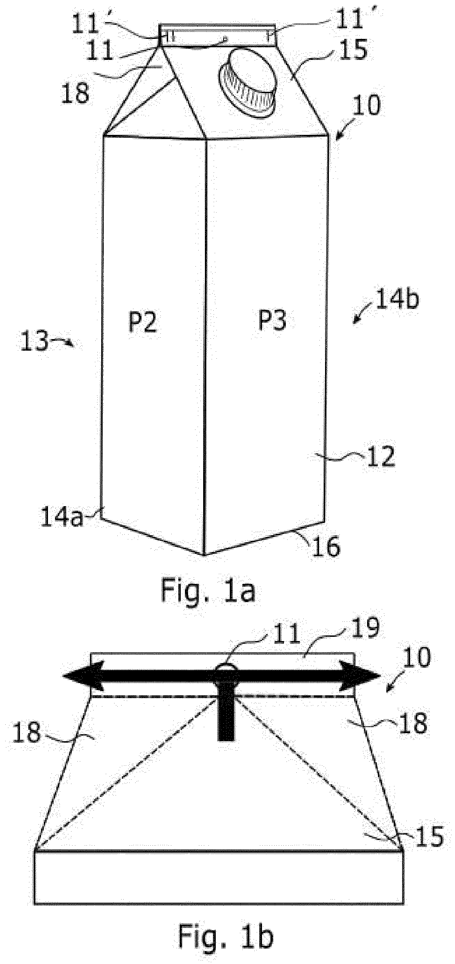

An example of an individual carton-based package 10 sealed according to an embodiment of the present invention is illustrated in Fig. 1a. The package 10 is a sealed package for enclosing a liquid food product, and is manufactured by folding and sealing a packaging material into the desired shape. The package 10 illustrated in Fig. 1a is provided with a so called gable top, having an opening provided at its upper end 15. The embodiment of Fig. 1a shows the opening as a screw cap provided on the upper end 15. The upper end 15 may instead or additionally comprise an opening in the form of a weakened end of one side gusset 18 to allow for a user to rip up the glue between the gussets 18 to form an opening on the side of the package 10. Other openings are also possible. What distinguishes the gable top package in Fig. 1a from prior art is that in addition to the standard sealing marks 11' (also called stake marks) near each end of the top part of the package 10, the sealing fin displays also a rounded sealing mark 11 formed as a recess in the packaging material of the sealing fin and which is located at the beginning of a channel 19 formed between gusset tips 18 displayed in Fig. 1b. Moreover, this sealing mark 11 may have a dome-like shape. The advantages of this shape of the sealing mark 11 will be described further down in the description.

The upper end 15 is connected to four lateral walls; a front side 12, a back side 13, and two lateral side walls 14a-b. The four lateral walls 12, 13, 14a-b are connected at their lower edge by a bottom end 16. The four lateral walls 12, 13, 14a-b form panels P1-P4 (only P2 and P3 are visible in Fig. 1a), which are pre-defined in the packaging material prior to manufacturing of the package 10.

Fig. 1b shows the upper end 15 of the package 10 of Fig. 1a. Dashed lines show the outlines of the gussets 18 that are formed during folding of the packaging material. Between the gusset 18 tips of each side, a channel 19 is formed. This channel 19 continues along the top tip of the gussets 18 until the side of the package 10 is reached, shown as a thick, black arrow. Most prior art solutions seal this channel 19 at its ends. However, the applicant has discovered that it is more beneficial to seal this channel 19 at its beginning, such as shown by the rounded sealing mark 11. Here, the sealing mark is displayed as larger than it is in reality in order to make it visible in the drawing. Placing the sealing mark 11 at this position has the advantage that it prevents liquid from getting into the channel 19 and thus depreciate the top sealing of the package 10, which would happen due to increased pressure in the channel 19. Moreover, the applicant has found that is further beneficial to seal the channel 19 as close to its beginning as possible in order to prevent the flow of liquid food product into the channel 19.

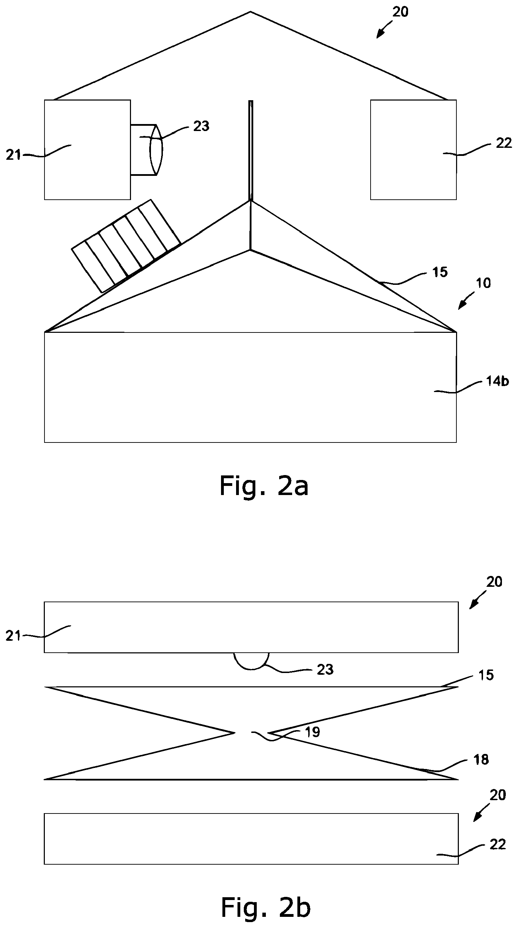

Fig. 2a shows a side view of a sealing jaw system 20 arranged to seal the top end 15 of the package 10 in order to achieve a shape of the sealing mark such as the sealing mark 11 in Fig. 1a. The embodiments discussed in this specification will focus on sealing jaws 21, 22 arranged to seal the top end 15 of the package 10, however a skilled person will realize that any part of the package 10 may be sealed using the sealing jaws 21, 22 according to this invention.

The sealing jaw system 20 shown is arranged as a single unit, comprising a first sealing jaw 21 and a second sealing jaw 22. The sealing jaw system 20 is aligned to press together the top end 15 of the package 10, i.e. two layers of packaging material together.

The first sealing jaw 21 comprises a protrusion 23 configured to apply excessive pressure to a specific part of the package 10. The second jaw 22 comprises a flat surface configured to cooperate with at least parts of the at least one protrusion 23 of the first jaw 21. The protrusion 23 and the flat surface on the second jaw 22 will create a sealing mark in the package 10 as they are pressed together.

The protrusion 23 shown has a rounded shape. This is beneficial as it has an increased surface area. This means that it is easier to align with the channel 19 and that it reduces the risk of missing the channel 19 altogether. The channel 19 may be in an irregular place, which the increased, evenly distributed surface area will be able to engage with as well. The rounded shape may be a circle, an oval, an ellipse, an oblong circle or similar.

Fig. 2b shows a top view of a sealing jaw system 20 and a package 10 during folding of the top end 15, right before the sealing process is initiated. The sealing jaw system 20 is here arranged as two separate units, wherein one unit comprises the first jaw 21 and the second unit comprises the second jaw 22. Preferably, during sealing the motion of the first and second jaws 21, 22 is synchronized.

The protrusion 23 shown has a dome-shaped top. This is advantageous because it has no sharp edges and distributes the force in an efficient manner. The lack of sharp edges reduces the risk of cutting through the packaging material, thereby causing tearing and increased risk of leakage. Most force will be directed towards the middle of the dome, which is where the channel 19 to be sealed is located.

The top end 15 of the package 10 is shown in a semi-folded state. The channel 19 will be formed between the two inner layers after they are fit together and become gussets 18.

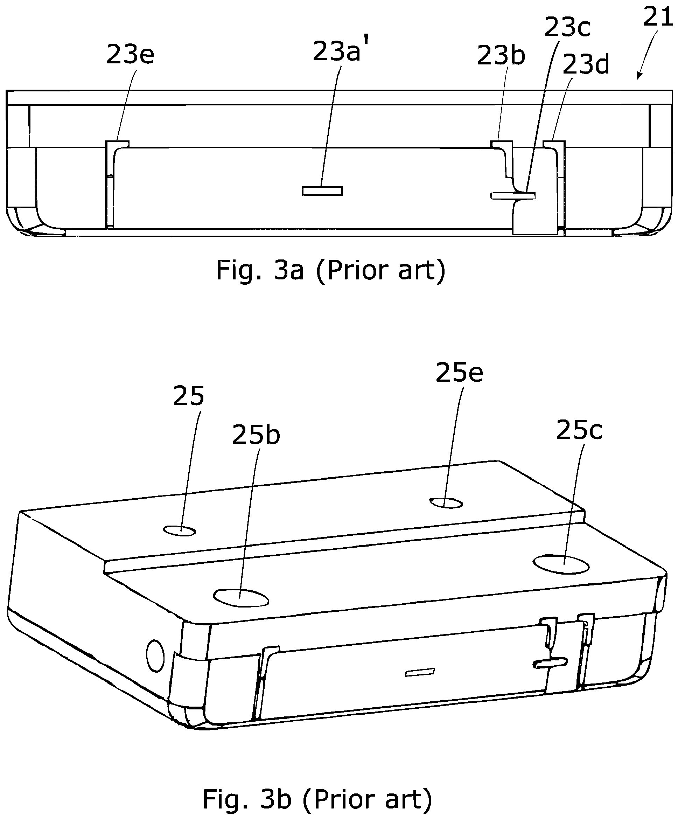

Figs. 3a-b show a first sealing jaw 21 according to the prior art. The sealing jaw 21 may comprise any number of protrusions 23, and the sealing jaw 21 shown in Figs. 3a-b comprise five protrusions 23a'-e. The middle protrusion 23a' is arranged to seal the beginning of the channel 19 and the other protrusions 23b-e are arranged to seal the ends of the channel 19. All of the protrusions 23a'-e are formed as oblong lines, some of which 23b, 23d-e are bent.

The sealing jaw 21 further comprises holes 25a-e configured to fasten the sealing jaw 21 to a moving structure. The sealing jaw 21 may be fastened to a single sealing jaw unit or as a separate unit to a sealing jaw system using these holes 25a-e.

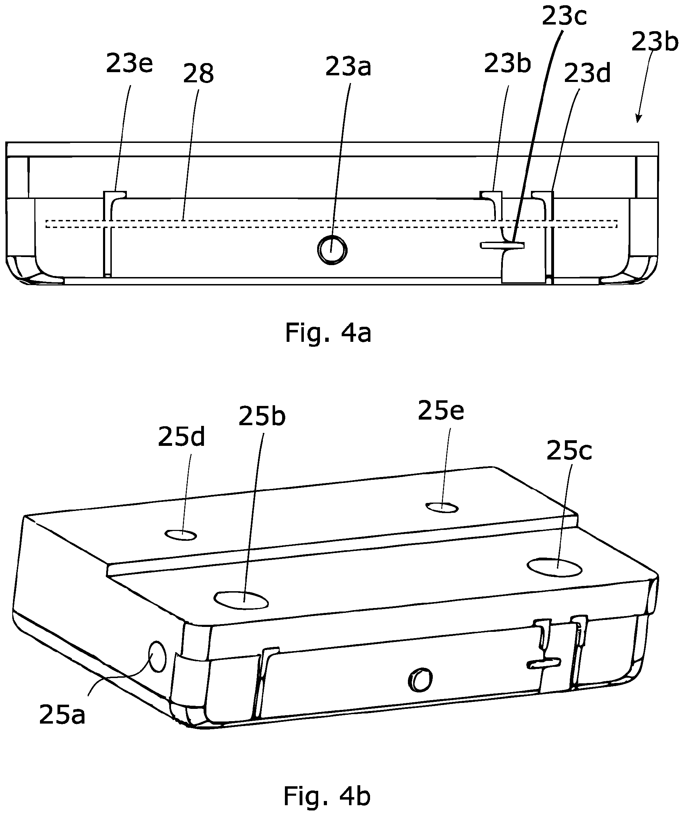

Figs. 4a-b show a first sealing jaw 21 according to two different embodiments. The sealing jaw 21 may comprise any number of protrusions 23, and the sealing jaw 21 shown in Figs. 4a-b comprises five protrusions 23a-e. The middle protrusion 23a is arranged to seal the beginning of the channel 19 and the other protrusions 23b-e are arranged to seal the ends of the channel 19. There may also be zero or more than one middle protrusion 23a, as the skilled person will realize. In a similar manner, there may be any number of protrusions 23b-e in proximity to at least two edges of the first jaw 21, including zero.

As mentioned previously, it is beneficial to place the rounded protrusion(s) 23a as close to the beginning of the channel 19 as possible. This has so far been difficult because the channel 19 will be harder to hit, but also because a higher pressure is required, which may cause tearing of the packaging material. The present disclosure offers two different, and synergistic, solutions to this problem as discussed below.

In the embodiments shown, the protrusions 23b-e arranged in proximity to the edges are all oblong lines and the middle protrusion 23a has a rounded shape. The skilled person will realize that this is only exemplary embodiments, and the attached claims define a scope for any protrusion 23a-e to be formed as oblong lines or rounded. The rounded shape is beneficial because it is easier to hit the channel 19. It further has a larger area, which distributes the pressure more, which reduces the risk for tearing.

Fig. 4a further shows that the first sealing jaw 21 may comprise a heating member 28 configured to seal the package 10 using heat. There are many other alternatives to seal the top end 15 of the package 10, wherein heat and induction will be discussed in detail. Other alternatives are also possible. Either the first sealing jaw 21 or the second sealing jaw 22, or both may comprise a heating member 28.

The heating member 28 is primarily to be used when the packaging material comprises an adhesive that is activated using heat, such as plastic, polymers, silicon or certain types of glue. The heating member 28 may be any member or members suitable to produce heat sufficient to activate the adhesive.

The heating member 28 may be arranged along the entire length of the side of the sealing jaw 20 that faces the packaging material during the sealing process. It may instead or additionally be arranged anywhere within the sealing jaw 20, and use heat conducting material comprised in the sealing jaw 20 to conduct the heat to the packaging material.

Fig. 4b shows a first sealing jaw 21 in an isometric view. This view further shows that one of the protrusions 23a has a dome-shaped top and the rest 23b-e do not. Once again, this is merely an exemplary embodiment, as any, all or none of the protrusions 23a-e may have a dome-shaped top, no matter the position or shape of the protrusion 23. An advantage of the dome-shaped top is that it reduces the risk of tearing of the packaging material by removing sharp edges. It also distributes pressure in a non-even manner, which focuses the pressure where it is most needed, i.e. to the center of the channel 19.

The sealing jaw 21 in Fig. 4b further comprises holes 25a-e configured to fasten the sealing jaw 21 to a moving structure. The sealing jaw 21 may be fastened to a single sealing jaw unit or as a separate unit to a sealing jaw system 20 using these holes 25a-e.

Fig. 4b further shows that the first sealing jay 21 may comprise an induction member 29 configured to seal the package 10 using induction. Either the first sealing jaw 21 or the second sealing jaw 22, both or neither may comprise an induction member 29.

The induction member 29 is primarily to be used when the packaging material comprises electrically well conducting materials, such as metals like copper, gold or aluminium or graphene. This material will be able to be heated by induction, which in turn allows for sealing the package using techniques as mentioned above.

The induction member 29 may be arranged along the entire length of the side of the sealing jaw 20 that faces the packaging material during the sealing process. It may instead or additionally be arranged anywhere within the sealing jaw 21, as the magnetic field may travel through the sealing jaw 21 to the packaging material.

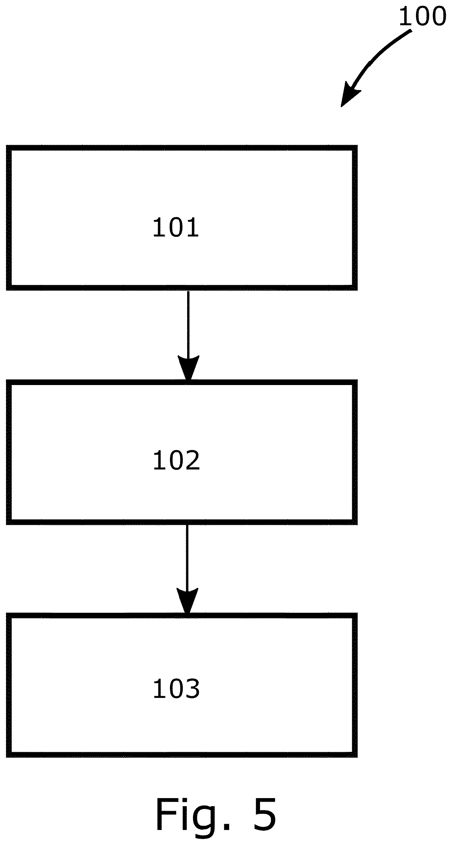

Fig. 5 shows a schematic illustration of a method 100 for sealing a package 10. It is shown to comprise three steps 101-103 performed in a specific order, however this is merely one embodiment of the method 100. The heating step 103 is e.g. optional and all steps 101-103 may be performed in any order or simultaneously.

The pressing step 101 comprises pressing at least two parts of a package, such as the package 10 in Fig. 1 together using a sealing jaw system 20. This sealing jaw system 20 may for example include the sealing jaw 21 as discussed previously. In the embodiment shown in Fig. 2b, the two parts are folded into four parts at certain sections, and into two layers at other sections. All of these parts may be pressed 101 at the same time, by using a single sealing jaw system 20.

The sealing step 102 comprises sealing the parts by pressing at channels 19 formed between gusset tips 18 using a sealing jaw 21 with at least one protrusion 23 with a rounded shape. Once again, this at least one protrusion 23 may e.g. be the same protrusion(s) 23 as discussed previously. The protrusion(s) 23 may e.g. have a dome-shaped top or have a rounded shape and a dome-shaped top. Some protrusions 23 may also be oblong lines.

The optional heating step 103 comprises heating the parts of the package (10) to be sealed to further improve the seal. This may be done using a heating member 28 or an induction member 29. As discussed previously, this effect is enhanced further if the packaging material from which the package 10 is made comprises a plastic, polymer, silicone or glue that melts during the heating step 103 to become adhesive. However, most adhesives get better using heat, so the above mentioned materials are not necessarily needed.

From the description above follows that, although various embodiments of the invention have been described and shown, the invention is not restricted thereto, but may also be embodied in other ways within the scope of the subject-matter defined in the following claims.

## Claims

1. A sealing jaw (21) for sealing a packaging container (10) configured to enclose a liquid food product, wherein the sealing jaw (21) comprises:
at least one protrusion (23) configured to apply pressure to a specific part of the package (10) during sealing, **characterized in that** the at least one protrusion (23) has a rounded shape.

2. The sealing jaw (21) according to claim 1, wherein the at least one protrusion (23) has a dome-shaped top.

3. The sealing jaw (21) according to any one of the previous claims, wherein the at least one protrusion (23a) is arranged at the center of the jaw (21) along its length direction.

4. The sealing jaw (21) according to any one of the previous claims, further comprising at least two protrusions (23b-e) in proximity to at least two edges of the first jaw (21).

5. The sealing jaw (21) according to any one of the previous claims, further comprising a heating member (28) configured to seal the packaging container (10) using heat.

6. The sealing jaw (21) according to any one of the previous claims, further comprising an induction member (29) configured to seal the packaging container (10) using induction.

7. A sealing jaw system (20), comprising a first sealing jaw (21) according to any of the preceding claims, and a second sealing jaw (22) comprising at least one recess (24) configured to engage with the at least one protrusion (23) of the first jaw (21).

8. The sealing jaw system (20) according to claims 8, wherein the first and second sealing jaws (21, 22) are provided as two separate units.

9. The sealing jaw system (20) according to claim 8 or 9, wherein the sealing jag system (20) is configured to seal a top end (15) of the package (10).

10. The sealing jaw system (20) according to claim 10, wherein the sealing jaw system (20) is further configured to seal channels (19) between gusset (18) tips of the package (10).

11. Packaging container (10) for enclosing a liquid food product, comprising:
- an upper end (15) with an opening;
- at least two lateral walls (12, 14, 14a-b) connected to the upper end (15);
- a bottom end (16) connected to the at least two lateral walls (12, 14, 14a-b), via a lower edge of the lateral walls (12, 14, 14a-b),
**characterized in that**
a part of the package (10) displays at least one sealing mark (11) in the form of a recess having a rounded shape.

12. Packaging container (10) according to claim 12, wherein the recess (11) has a dome-shaped top.

13. Packaging container (10) according to claim 11 or 12, wherein the part of the package displaying the sealing mark (11) in the form of a recess is a sealing fin and wherein the sealing mark (11) is located at the beginning of channel formed between folded gusset tips (18) of the packaging container.

14. A method (100) for sealing a packaging container (10) configured for enclosing a liquid food product, comprising the steps of:
pressing (101) at least two parts of the packaging container (10) together using a sealing jaw system (20); and
sealing (102) the two parts to each other by pressing at least one channel (19) formed between gusset (18) tips of the packaging (10) using at least one protrusion (23) with a rounded shape.

15. The method (100) according to claim 13, wherein sealing (102) is performed by using at least one protrusion (23) with a dome-shaped top.

16. The method (100) according to claim 13 or 14, wherein sealing (102) is performed by using at least one protrusion (23a) with a rounded shape and a dome-shaped top.

17. The method (100) according to any one of the claims 13-15, further comprising heating (103) the layers to further improve the seal.

18. The method (100) according to claim 15, wherein heating (103) is performed using a heating member (28).

19. The method (100) according to claim 15 or 16, wherein heating (103) is performed using an induction member (29).
